# EUROPÄISCHE PATENTSCHRIFT

(11) **EP 1 568 601 B1**
(45) Veröffentlichungstag und Bekanntmachung des Hinweises auf die Patenterteilung: **26.07.2006**
(21) Anmeldenummer: 05001069.3
(22) Anmeldetag: 20.01.2005
(51) Int. Cl.: B63G 8/00

(54) **Unterseeboot mit einem zwischen die Batterie und die Brennstoffzellenanlage geschaltet DC/DC Steller**
Submarine with a DC/DC converter mounted between the battery and the fuel cells
Sous-marin avec un contrôleur CC/CC monté entre la batterie et les piles à combustible

(30) Priorität: 26.02.2004 DE 102004009225
(43) Veröffentlichungstag der Anmeldung: 31.08.2005
(73) Patentinhaber: Howaldtswerke-Deutsche Werft GmbH, 24143 Kiel (DE)
(72) Erfinder: Iwers, Uwe-Jens, Dipl.-Ing., 23568 Lübeck (DE); Elvers, Dirk, Dipl.-Ing. (FH), 24105 Kiel (DE)
(74) Vertreter: Vollmann, Heiko

(56) Entgegenhaltungen:
- DE-A1- 10 259 041
- US-A1- 2002 113 595
- SATTLER G: "Fuel cells going on-board" JOURNAL OF POWER SOURCES, ELSEVIER SEQUOIA S.A. LAUSANNE, CH, Bd. 86, Nr. 1-2, März 2000 (2000-03), Seiten 61-67, XP004194100 ISSN: 0378-7753

## Beschreibung

Die Erfindung betrifft ein Unterseeboot gemäß den im Oberbegriff des Anspruchs 1 angegebenen Merkmalen sowie ein Verfahren zum Betreiben eines elektrischen Versorgungsnetzes eines solchen Unterseebootes. Ein solches Unterseeboot sowie Verfahren ist von der Druckschrift Journal of power sources; Elsevier Sequoia S.A. Lausanne, CH; "Fuel celles going on-board"; Sattler G.; Bol. 86, Nr. 1-2, Mârz 2000 (2000-03), Seiten 61-67; ISSN: 0378-7753 bekannt

Bei nicht nuklear angetriebenen Unterseebooten zählt es heute zum Stand der Technik für den Unterwasserbetrieb als außenluftunabhängige Energiequelle (AIP - Air Independent Propulsion) neben den wiederaufladbaren Batterien auch eine Brennstoffzellenanlage einzusetzen, um die Reichweite des Bootes in tiefgetauchter Fahrt, d.h. in einer Tauchtiefe, in der auch mit Hilfe des Schnorchels keine Verbindung zur Außenluft mehr möglich ist, zu vergrößern. Dabei ist nicht nur der elektromotorisch angetriebene Propeller, sondern auch das Bordnetz zu versorgen.

In der Brennstoffzellenanlage wird Wasserstoff unter Freisetzung elektrischer Energie katalytisch oxidiert. Als Oxidant wird an Bord gelagerter Sauerstoff verwendet. Aus Betriebsgründen sind Batterie- und Brennstoffzellenanlage parallel geschaltet, dabei ist es systembedingt zweckmäßig, den Grundbedarf elektrischer Energie aus der Brennstoffzellenanlage zu decken und nur für Leistungsspitzen Energie aus der Batterie zusätzlich zuzuführen. Andererseits ist die Brennstoffzellenanlage vor plötzlichen Last- und Spannungssprüngen zu schützen, so dass auch bei sprunghaften Laständerungen im System die Batterie das plötzliche Energiedefizit im Übergang abdecken muss, bis die Brennstoffzellenanlage auf die erhöhte Leistung hochgefahren ist oder aber die Volllast erreicht hat.

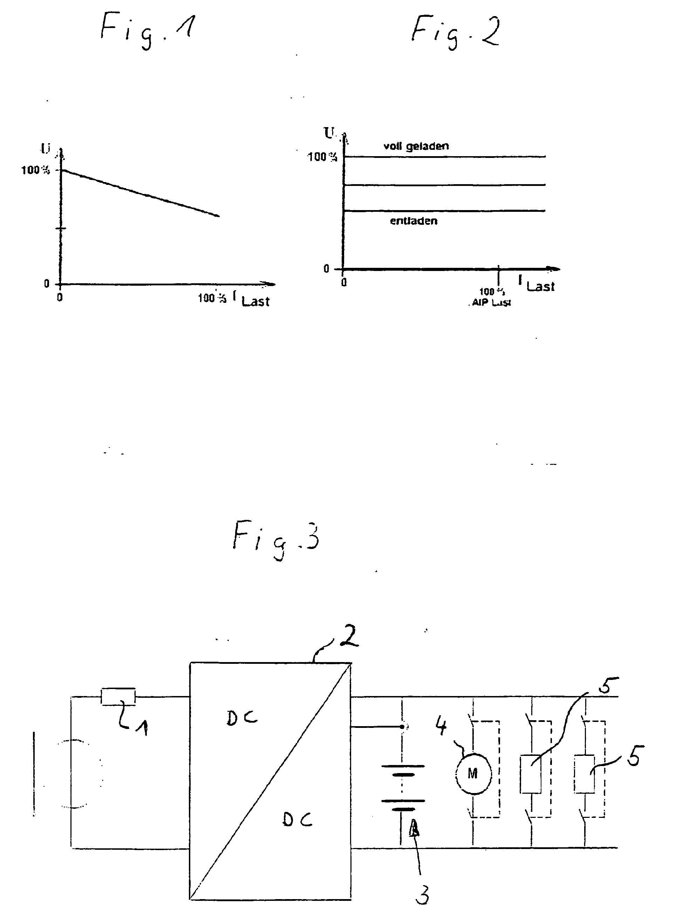

Dies stellt beim Stand der Technik, bei dem Brennstoffzellenanlage und Batterie parallel geschaltet sind, ein Problem dar. Die Brennstoffzellenanlage liefert eine Gleichspannung, deren Höhe vom aktuellen Laststrom und weiteren Parametern, wie z.B. Gasdruck, Alterung, Temperatur usw. abhängig ist. Die Klemmenspannung ändert sich abhängig vom Strom im Verhältnis von etwa 1:2. Eine typische Kennlinie einer solchen Brennstoffzellenanlage ist in Fig. 1 dargestellt.

Die Spannung der Fahrbatterie hingegen ist vom aktuellen Ladezustand abhängig und im Bereich bis zum Brennstoffzellennennstrom nahezu stromunabhängig. Auch die Spannung der Fahrbatterie ändert sich nahezu im Verhältnis 1:1,5 zwischen leerer Batterie bei Volllast und voller Batterie ohne Laststrom. Während des Ladens hingegen kann die Batteriespannung bis auf das 1,4-fache der Betriebsspannung ansteigen. Die entsprechenden Spannungs-/Lastkennlinien einer solchen Batterie sind in Fig. 2 dargestellt.

Da die Batterie eine von mehreren Betriebsparametern abhängige Spannungscharakteristik aufweist, die sich von der der Brennstoffzellenanlage unterscheidet, ist Vorsorge gegen unerwünschte Ausgleichsströme zu treffen. Dabei sind insbesondere Rückströme aus der Batterie in die Brennstoffzellenanlage zu vermeiden. Auch ein unkontrolliertes Laden der Batterie aus der Brennstoffzellenanlage ist nicht erwünscht. Rückströme aus der Batterie in die Brennstoffzellenanlage werden beim Stand der Technik dadurch vermieden, dass die Brennstoffzellenanlage so ausgelegt wird, dass ihre Ausgangsspannung oberhalb der Batteriespannung liegt. Um zu vermeiden, dass aufgrund dieses erhöhten Spannungsniveaus der Brennstoffzellenanlage gegenüber der Batterie ein unerwünschter Ladestrom in die Batterie fliest, ist diese über Dioden angeschlossen, die jedoch im Batterieladebetrieb durch Schaltgeräte überbrückt werden müssen. Darüber hinaus müssen die Dioden so dimensioniert sein, dass sie den maximalen Strom, also den Strom, der bei höchster Leistungsabgabe des Propellermotors und des Versorgungsnetzes erforderlich ist, tragen können. Alternativ müssen die Dioden oberhalb einer bestimmten Stromstärke mit Schaltgeräten überbrückt werden, dies ist technisch aufwendig und teuer.

Eine auslegungsgemäße Anpassung der Brennstoffzellenanlagenspannung ist darüber hinaus nur bedingt möglich, da jede Brennstoffzelle eine typgebundene Spannungshöhe aufweist, welche die Spannungsstufen bei der Auslegung bestimmt. Aufgrund dieser nicht optimierbaren Spannungsauslegung ist meist ein gezielter Ladebetrieb der Batterie mittels der Brennstoffzellenanlage nicht möglich. D.h. der Ladebetrieb erfolgt dann zu einem für die Brennstoffzellenanlage ungünstigen Betrieb, was Wirkungsgradverluste mit sich bringen kann. Durch die galvanische Verbindung der Brennstoffzellenanlage mit der Batterie ist es unvermeidbar, dass alle Last- und Spannungssprünge auch von der Brennstoffzellenanlage direkt zu kompensieren sind. Ein weiterer Nachteil dieser bekannten Schaltungsanordnung liegt darin, dass eine Rückspeisung von Bremsenergie, wie sie im Schubbetrieb durch den mitlaufenden Propeller generiert wird, aufgrund des Spannungsniveaus zwischen Brennstoffzellenanlage und Batterie nicht in die Batterie einspeisbar ist. Eine Einspeisung in die Brennstoffzellenanlage ist hingegen zu vermeiden, weshalb die anfallende Bremsenergie nutzlos und aufwändig in zusätzlichen Widerstandschaltungen abgebaut werden muss.

Vor diesem Hintergrund liegt der Erfindung die Aufgabe zugrunde, ein gattungsgemäßes Unterseeboot mit einer außenluftunabhängigen Antriebs- und Energieversorgung so auszubilden, dass die vorgenannten Nachteile vermieden oder zumindest vermindert werden. Es soll im Weiteren ein entsprechendes Verfahren zum Betreiben eines elektrischen Versorgungsnetzes eines Unterseebootes mit Brennstoffzellenanlage und Batterie geschaffen werden, das die vorgenannten Probleme vermeidet.

Der vorrichtungsmäßige Teil der obigen Aufgabe wird durch die in Anspruch 1 angegebenen Merkmale gelöst. Anspruch 8 definiert ein erfindungsgemäßes Verfahren zum Betreiben eines elektrischen Versorgungsnetzes eines Unterseebootes. Vorteilhafte Ausgestaltungen der Erfindung sind in den Unteransprüchen, der nachfolgenden Beschreibung und der Zeichnung angegeben.

Grundgedanke der vorliegenden Erfindung ist es, die Brennstoffzellenanlage nicht direkt parallel zur Batterie zu schalten, sondern über einen DC/DC-Steller einzubinden. Diese erfindungsgemäße Lösung hat den Vorteil, dass einerseits die Ausgangsspannung der Brennstoffzellenanlage über den DC/DC-Steller in Grenzen beliebig einstellbar ist und andererseits zuverlässig Rückströme von der Batterie oder dem Versorgungsnetz in die Brennstoffzellenanlage vermieden werden. Darüber hinaus ist die Brennstoffzellenanlage durch den DC/DC-Steller zur Entkopplung von der Batterie, vom Versorgungsnetz und somit den elektrischen Verbrauchern galvanisch getrennt, so dass sprunghafte Laständerungen keine unmittelbare Rückwirkung auf die Brennstoffzellenanlage haben müssen.

Bei dem DC/DC-Steller handelt es sich um eine leistungselektronische Anlage, die in der Lage ist, eine Ausgangsgleichspannung zu erzeugen, die im spezifizierten Rahmen je nach Systemanforderung wesentlich höher oder niedriger sein kann als die Gleichspannung der Brennstoffzellenanlage am Eingang des Stellers. Dieser DC/DC-Steller wird dem System so zugeordnet, dass die aus dem System geforderte Leistung entsprechend den unterschiedlichen Spannungslagen adaptiert und in erster Linie von der Brennstoffzellenanlage zur Verfügung gestellt werden kann. Aufgrund des besseren Wirkungsgrades der Brennstoffzellenanlage bei Teillast sowie des chemischen Wirkungsgrades der Batterie bei Ladung/Entladung kann mit Hilfe des DC/DC-Stellers über eine entsprechende Regelung der Spannung sichergestellt werden, dass die Grundlast stets durch die Brennstoffzellenanlage abgedeckt wird, während die Leistungsspitzen oder plötzliche Lastsprünge durch die Batterie abgedeckt werden. Es ist somit eine optimale Reaktantennutzung möglich.

Weiterhin kann dann, wenn der Leistungsbedarf des Unterseeboots unter die Nennleistung der Brennstoffzellenanlage fällt, die Brennstoffzellenanlage mit Nennleistung gefahren werden, wobei die dann überschüssige Leistung zum Laden der Batterie genutzt werden kann.

Um den DC/DC-Steller vor einer Überlast und somit der Zerstörung oder Schädigung der Leistungshalbleiter zu schützen, ist dem DC/DC-Steller vorzugsweise in einer untersten Regelungsebene ein Stromregler zugeordnet, welcher dafür sorgt, dass der in dem DC/DC-Steller fließende Strom einen vorbestimmten, höchst zulässigen Wert nicht überschreitet. Da eine Brennstoffzellenanlage typischerweise aus einer Vielzahl von zu Stacks hintereinander geschalteten Brennstoffzellen und wiederum parallel geschalteten Stacks besteht, ist für diese Stromregelung der untersten Regelungsebene jedem Einzelkanal, also jedem Stack ein solcher Stromregler zuzuordnen, so dass der Gesamtstrom einen vorbestimmten Wert nicht überschreitet. Diese Regelung der untersten Regelungsebene schützt somit die Brennstoffzellenanlage wirksam vor Überlastung.

Vorteilhaft weist der DC/DC-Steller einen weiteren Stromregler in einer unteren Regelungsebene auf, welche sicherstellt, dass der Ausgangsstrom des DC/DC-Stellers einen vorbestimmten, vorzugsweise den höchstzulässigen Wert nicht überschreitet.

Dem Stromregler für den Ausgangsstrom des DC/DC-Stellers ist vorteilhaft ein Spannungsregler überlagert, welcher sicherstellt, dass die Ausgangsspannung am DC/DC-Steller einen vorbestimmten, vorzugsweise den höchstzulässigen Wert nicht überschreitet. Dieser höchstzulässige Wert ist typischerweise durch die Sperrfähigkeit des Ausgangsgleichrichters definiert.

Die vorbeschriebenen Strom- und Spannungsregelungen dienen im Wesentlichen dem sicheren Betrieb des DC/DC-Stellers. Für den optimierten Betrieb der Energieversorgung des Unterseebootes im AIP-Betrieb hingegen ist primär ein Spannungsregler vorgesehen, welcher die Ausgangsspannung des DC/DC-Stellers regelt, und zwar für vorzugsweise 2 Betriebsarten, nämlich zu einen den Normalbetrieb und zum anderen den Ladebetrieb.

Im Ladebetrieb wird die Ausgangsspannung des DC/DC-Stellers soweit angehoben, bis sich ein entsprechender Ladestrom der Batterie einstellt. Dabei ist die Regelung gemäß der Erfindung so ausgelegt, dass die Brennstoffzellenanlage im Nennlastbereich betrieben wird.

Im Normalbetrieb hingegen wird die Spannung am Ausgang des DC/DC-Stellers so geregelt, dass der Batteriestrom Null wird oder zumindest gegen Null strebt. Diese Regelung hat den Vorteil, dass die Grundlast der elektrischen Versorgung des Unterseebootes im AIP-Betrieb von der Brennstoffzellenanlage zur Verfügung gestellt wird, also einen Teillastbereich, in dem sie energetisch besonders günstig, d.h. mit hohem Wirkungsgrad arbeitet.

Die Lastspitzen hingegen werden durch die Batterie abgedeckt, wobei die Regelung so ausgelegt ist, dass bei einem plötzlichen Lastanstieg, dessen elektrische Last durch die Brennstoffzellenanlage abgedeckt werden könnte, dieser Lastanstieg nicht unmittelbar durch die Brennstoffzellenanlage abgedeckt wird, sondern zunächst durch die Batterie und dann langsam ansteigend durch die Brennstoffzellenanlage. Diese Verfahrensweise kommt dem Regelverhalten der Brennstoffzellenanlage entgegen. Die Regelung erfolgt also so, dass bei einem plötzlichen Lastanstieg durch eine elektrische Last, die von der Brennstoffzellenanlage noch abzudecken ist, zunächst die Spannung am Ausgang des DC/DC-Stellers so eingestellt wird, dass ausgehend von der bisherigen Last, die Spannung nach einem vorgegebenen zeitlichen Verlauf, der vorzugsweise dem Lastanstiegsprofil der Brennstoffzellenanlage entspricht, wieder angehoben wird.

Übersteigt hingegen der Lastanstieg die Leistung der Brennstoffzellenanlage kurzzeitig oder auch längerfristig, so ist gemäß der Erfindung vorgesehen, die Ausgangsspannung am DC/DC-Steller so ein zustellen, dass der für die Brennstoffzellenanlage maximal zulässige Strom nicht überschritten wird, derart, dass bei dann steigendem Strombedarf der zusätzliche Teilstrom von der Batterie abgedeckt wird.

In Weiterbildung des erfindungsgemäßen Verfahrens ist vorgesehen, dass der DC/DC-Steller auf eine vorbestimmte Spannung, vorzugsweise die Nennspannung des Versorgungsnetzes eingestellt bzw. geregelt wird. Der DC/DC-Steller kann dann im Rahmen des Leistungsvermögens der BZA das Bordnetz alleine versorgen. Diese Regelung ist als so genannte Havarieschaltung vorgesehen, wenn, aus welchen Gründen auch immer, die Batterie ausfallen sollte.

Zum Laden der Batterie wird die Ausgangsspannung des DC/DC-Stellers soweit angehoben, dass zumindest ein Teilstrom in die Batterie fließt. Dabei erfolgt die Spannungsregelung zweckmäßigerweise so, dass die Brennstoffzellenanlage im Nennlastbereich betrieben wird.

Die Erfindung ist nachfolgend anhand eines in der Zeichnung dargestellten Ausführungsbeispiels näher erläutert. Es zeigen
- Fig. 1: ein typische Lastprofil einer Brennstoffzellenanlage,
- Fig. 2: typische Lastprofile einer Batterie in unterschiedlichen Ladezuständen,
- Fig. 3: in stark vereinfachter Darstellung ein Schaltbild der Energieversorgungsanlage eines Unterseeboots,
- Fig. 4: ein Blockschaltbild, welches den funktionalen Aufbau des DC/DC-Stellers darstellt,
- Fig. 5: ein Schaltbild des DC/DC-Stellers und
- Fig. 6: einen Signalflussplan der im Zusammenhang mit dem DC/DC-Steller vorgesehenen Regelungen.

Das anhand von Fig. 3 vereinfacht dargestellte Schaltbild der Energieversorgung für ein Unterseeboot zeigt eine Brennstoffzellenanlage 1, deren elektrischer Ausgang mit dem Eingang eines DC/DC-Stellers 2 verbunden ist. Der Ausgang des DC/DC-Stellers 2 liegt parallel zu einer wiederaufladbaren Batterie 3 und bildet das elektrische Versorgungsnetz des Unterseebootes, das zum einen zur Speisung des einen Propeller antreibenden Motors 4 sowie weiterer Verbraucher 5 des Bordnetzes besteht.

Die Brennstoffzellenanlage 1 ist dabei nur symbolisch dargestellt und besteht in an sich bekannter Weise aus mehreren Brennstoffzellenmodulen, in Form von Stacks, die parallel, ggf. in Reihe geschaltet sind. Jedes einzelne Modul/Stack besteht aus einer Vielzahl von in Reihe geschalteten Brennstoffzellen. Die Ausgangsspannung einer jeden Brennstoffzelle und somit auch die sich entsprechend der Anzahl der in Reihe geschalteten Brennstoffzellen ergebende Ausgangsspannung eines Brennstoffzellenmoduls ist typbedingt.

Auch die Batterie 3 besteht, wie in Unterseebooten üblich, aus einer Vielzahl von zu Blöcken in Reihe geschalteten Batteriezellen, wobei mehrere Blöcke wiederum parallel geschaltet sein können.

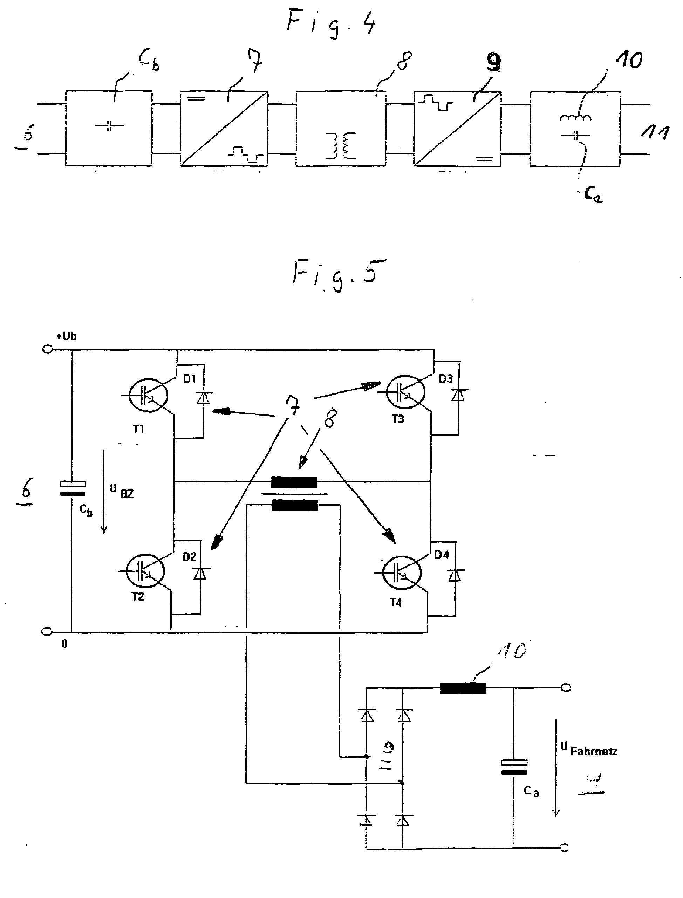

Der Aufbau des DC/DC-Stellers 2 ist anhand der Figuren 4 und 5 ersichtlich. Der Eingang 6 des DC/DC-Stellers, der mit dem Ausgang der Brennstoffzellenanlage elektrisch verbunden ist, weist einen Eingangskondensator C_{b} auf, dessen Kapazität parallel zum Eingang 6 liegt. Parallel dazu ist ein IGBT (Insuleted Gate Bipolare Transistor) Konverter 7 geschaltet, welcher die am Eingang 6 anliegende Gleichspannung in eine hochfrequente Wechselspannung umwandelt. Dies geschieht mit Hilfe von 4 Leistungstransistoren T₁ bis T₄, denen jeweils eine Freilaufdiode D₁ bis D₄ antiparallel geschaltet ist. Diese durch die Leistungshalbleiter T₁ bis T₄ aus der am Eingang anliegenden Gleichspannung geschaltete Wechselspannung wird an die Primärspule eines Transformators 8 gelegt, welcher auf eine Spannung passender Höhe transformiert. Diese an der Sekundärseite des Transformators 8 anliegende Wechselspannung wird mittels eines Brückengleichrichters 9 gleichgerichtet, dem ein LC-Glied, bestehend aus Stromglättungsdrossel 10 und Kondensator Cₐ nachgeschaltet ist.

Durch Modulation des Stromes im Wechselstromzwischenkreis 7 kann die übertragene Leistung bzw. die Ausgangsspannung am Ausgang 11 in weiten Grenzen eingestellt werden.

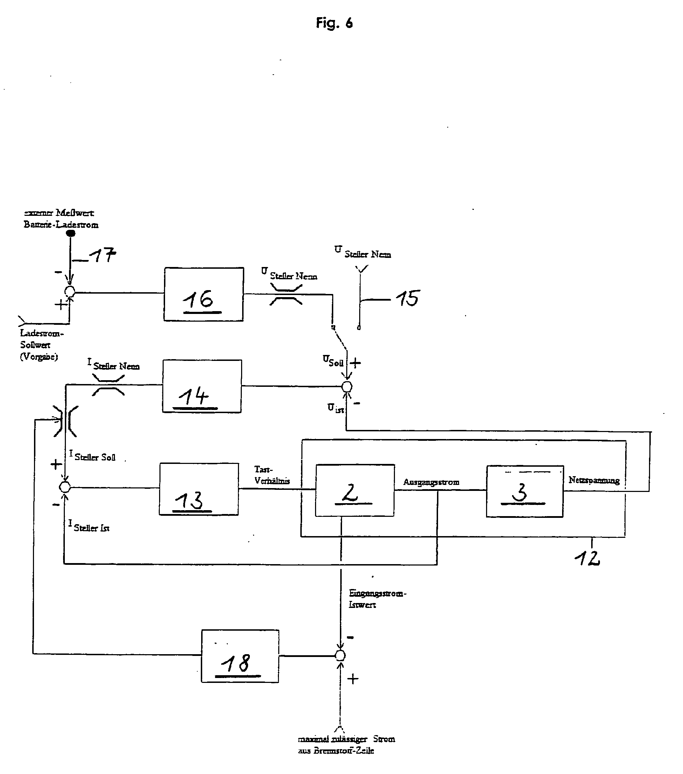

Die Regelung erfolgt, wie anhand von Fig. 6 dargestellt. Der DC/DC-Steller 2 mit dem parallel geschalteten Netz (Verbraucher 5, Motor 4, Batterie 3) bildet die eigentliche Regelstrecke, deren Ausgangsspannung geregelt wird. Auf der untersten Regelebene ist ein Stromregler 13 vorgesehen, welcher den DC/DC-Steller 2 steuert, und der den Ausgangsstrom des DC/DC-Stellers 2 auf ein höchst zulässigen Wert begrenzt. Dem Stromregler 13 überlagert ist ein Spannungsregler 14, der die Einhaltung der maximalen Ausgangsspannung des DC/DC-Stellers 2 und somit der elektrischen Versorgung des Unterseebootes sicherstellt. Dieser Spannungsregler 14 stellt sicher, dass die Ausgangsspannung am DC/DC-Steller 2 nicht über die für den Gleichrichter 9 im Ausgang 11 des DC/DC-Stellers 2 zulässige Spannung ansteigt und verhindert somit eine Überschreitung der Sperrfähigkeit des Gleichrichters 9.

Dieser Spannungsregler 14 erlaubt darüber hinaus den Betrieb des Netzes mit konstanter Spannung ohne eine parallel geschaltete Batterie, die so genannte Havarieschaltung 15, bei der eine konstante Spannung vorgegeben ist und die für den Betrieb der Anlage bei Ausfall oder Defekt der Batterie 3 vorgesehen ist. Im normalen Betrieb, so wie es die in Fig. 6 dargestellte Schaltstellung repräsentiert, ist für mehrere, parallel geschaltete Kanäle (bestehend aus BZ-Strack und DC/DC-Steller) nur ein Spannungsregler vorhanden, der allen Kanälen den gleichen Strom-Sollwert übergibt, so dass ein perfekter Parallellauf gewährleistet ist. Der Sollwert des Spannungsreglers ist auf einen höchstzulässigen Wert begrenzt.

Als weitere überlagerte Regelung ist ein Batteriestromregler 16 vorgesehen, der ausschließlich zur Betriebsart Batterieladen vorgesehen ist. Dieser Regler ist so ausgelegt, dass die Brennstoffzellenleistung möglichst ausschließlich zur Abdeckung des aktuellen Leistungsbedarfs genutzt wird. Dies ist stets dann der Fall, wenn der Batteriestrom Null ist bzw. gegen Null strebt. Hierzu wird der Batteriestrom gemessen und bei 17 dem Batteriestromregler zugeführt. Mit dem Batteriestromregler 16 ist es somit möglich, die Abgabeleistung des DC/DC-Stellers 2 stets so zu regeln, dass der Batteriestrom minimiert wird. Damit wird der Leistungsbedarf der Anlage stets von der Brennstoffzellenanlage 1 bereitgestellt, zumindest so lange keine sprunghaften Lasten anstehen oder die Brennstoffzellenanlage 1 ihre Maximalleistung noch nicht erreicht hat.

Um bei steigenden Leistungsbedarf die Brennstoffzellenanlage 1 vor Überlast zu schützen ist ein weiterer Stromregler 18 vorgesehen, welcher den Eingangsstrom-Istwert des DC/DC-Stellers 2 mit dem maximal zulässigen Strom aus der Brennstoffzellenanlage 1 vergleicht und die Brennstoffzellenanlage gegebenenfalls zurückregelt.

Weiterhin sorgt dieser Stromregler 18 dafür, dass bei plötzlichem Leistungsbedarf, auch wenn dieser durch die Brennstoffzellenanlage 1 grundsätzlich abdeckbar wäre, zur Vermeidung einer, wenn auch nur kurzzeitigen Überlastung der Brennstoffzellenanlage 1 diese in einer Rampenfunktion hochgefahren wird und der zwischenzeitliche Leistungsbedarf durch die Batterie 3 gedeckt wird.

### Bezugszeichenliste

- 1 -: Brennstoffzellenanlage
- 2 -: DC/DC-Steller
- 3 -: Batterie
- 4 -: Motor
- 5 -: Verbraucher
- 6 -: Eingang des DC/DC-Stellers
- 7 -: Konverter
- 8 -: Transformator
- 9 -: Gleichrichter
- 10 -: Drossel
- 11 -: Ausgang
- 12 -: Regelstrecke
- 13 -: Stromregler
- 14 -: Spannungsregler
- 15 -: Havarieschaltung
- 16 -: Batteriestromregler
- 17 -: Batteriestrom
- 18 -: Stromregler
- D₁ - D₄ -: Freilaufdioden
- T₁ - T₄ -: Leistungstransistoren
- Cₐ -: Ausgangskondensator
- C_{b} -: Eingangskondensator

## Patentansprüche

1. Unterseeboot mit einer außenluftunabahängigen Antriebs- und Energieversorgung, mit mindestens einer Brennstoffzellenanlage (1) und mindestens einer wiederaufladbaren Batterie (3), welche beispielsweise einen Elektromotor (4) für den Fahrantrieb sowie das Bordnetz (5) speisen, **dadurch gekennzeichnet, dass** der Brennstoffzellenanlage (1) ein DC/DC-Steller (2) nachgeschaltet ist, dessen Ausgang (11) parallel zur Batterie (3) geschaltet ist.

2. Unterseeboot nach Anspruch 1, **dadurch gekennzeichnet, dass** dem DC/DC-Steller (2) ein Stromregler (13) zugeordnet ist, welcher den Ausgangsstrom des DC/DC-Stellers (2) auf einen vorbestimmten, vorzugsweise den maximal zulässigen Wert begrenzt.

3. Unterseeboot nach einem der vorhergehenden Ansprüche, **dadurch gekennzeichnet, dass** dem DC/DC-Steller (2) ein Stromregler (18) zugeordnet ist, welcher den Strom der Brennstoffzellenanlage (1) auf einen vorbestimmten, vorzugsweise auf den maximal zulässigen Wert begrenzt.

4. Unterseeboot nach einem der vorhergehenden Ansprüche, **dadurch gekennzeichnet, dass** die Brennstoffzellenanlage (1) ein oder mehr parallel geschaltete Brennstoffzellenmodule aufweist, wobei jedem Brennstoffzellenmodul ein Stromregler zugeordnet ist, welcher den Strom eines Brennstoffzellenmoduls auf einen vorbestimmten, vorzugsweise den maximal zulässigen Wert begrenzt.

5. Unterseeboot nach einem der vorhergehenden Ansprüche, **dadurch gekennzeichnet, dass** dem DC/DC-Steller (2) ein Spannungsregler zugeordnet ist, welcher die Ausgangsspannung im Normalbetrieb auf die Nennspannung der Batterie einstellt.

6. Unterseeboot nach einem der vorhergehenden Ansprüche, **dadurch gekennzeichnet, dass** dem DC/DC-Steller (2) ein Spannungsregler (14) zugeordnet ist, welcher die Ausgangsspannung auf eine vorbestimmte, vorzugsweise die maximal zulässige Spannung begrenzt.

7. Unterseeboot nach einem der vorhergehenden Ansprüche, **dadurch gekennzeichnet, dass** Regeleinrichtungen (14) vorgesehen sind, welche im Ladebetrieb die Ausgangsspannung des DC/DC-Stellers (2) so einstellen, das die Brennstoffzellenanlage (1) im Nennlastbereich betrieben wird.

8. Verfahren zum Betreiben eines elektrischen Versorgungsnetzes eines Unterseebootes mit Brennstoffzellenanlage (1) und Batterien (3), bei dem der Brennstoffzellenanlage (1)ein oder mehrere DC/DC-Steller (2) nachgeschaltet ist bzw. sind, wobei der Ausgang jeweils (11) parallel zur Batterie (3) liegt und jeweils den Ausgang des Versorgungsnetzes (5) bildet, und bei dem im Normalbetrieb die Ausgangsspannung jedes DC/DC-Stellers (2) so geregelt wird, dass der Batteriestrom Null wird oder zumindest gegen Null strebt.

9. Verfahren nach Anspruch 8, **dadurch gekennzeichnet, dass** erst nach dem Erreichen des für die Brennstoffizellenanlage (1) maximal zulässigen Stromes die Ausgangsspannung am DC/DC-Steller (2) abgesenkt wird, derart, dass bei dann steigendem Strom ein Teilstrom von der Batterie (3) geliefert wird.

10. Verfahren nach einem der vorhergehenden Ansprüche, **dadurch gekennzeichnet, dass** bei plötzlichem Lastanstieg der Strom der Brennstoffzellenanlage (1) nach einem vorgegebenen zeitlichen Verlauf, der vorzugsweise dem Lastanstiegsprofil der Brennstoffzellenanlage (1) entspricht, angehoben wird.

11. Verfahren nach einem der vorhergehenden Ansprüche, **dadurch gekennzeichnet, dass** bei Ausfall der Batterie (3) der DC/DC-Steller (2) auf eine Vorbestimmte Spannung, vorzugsweise die Nennspannung des Versorgungsnetzes (5) eingestellt/geregelt wird.

12. Verfahren nach einem der vorhergehenden Ansprüche, **dadurch gekennzeichnet, dass** im Ladebetrieb die Ausgangsspannung des DC/DC-Stellers (2) so weit angehoben wird, dass zumindest ein Teilstrom in die Batterie (3) fließt.

## Claims

1. A submarine with an air independent propulsion- and energy supply, with at least one fuel cell installation (1) and at least one rechargeable battery (3), which for example supply an electric motor (4) for travel operation as well as the on-board power supply (5), **characterised in that** a DC/DC controller (2) whose output (11) is connected parallel to the battery (3), is connected downstream of the fuel cell installation (1).

2. A submarine according to claim 1, **characterised in that** a current regulator (3) is allocated to the DC/DC controller (2) and limits the output current of the DC/DC controller (2) to a predefined, preferably the maximal permissible value.

3. A submarine according to one of the preceding claims, **characterised in that** a current regulator (18) is allocated to the DC/DC controller (2) and limits the current of the fuel cell installation (1) to a predefined, preferably to the maximal permissible value.

4. A submarine according to one of the preceding claims, **characterised in that** the fuel cell installation (1) comprises one or more fuel cell modules connected in parallel, wherein a current regulator is allocated to each fuel cell module and limits the current of a fuel cell module to a predefined, preferably maximal permissible value.

5. A submarine according to one of the preceding claims, **characterised in that** a voltage regulator is allocated to the DC/DC controller (2) and sets the output voltage in normal operation to the rated voltage of the battery.

6. A submarine according to one of the preceding claims, **characterised in that** a voltage regulator (14) is allocated to the DC/DC controller (2) and limits the output voltage to a predefined, preferably the maximal permissible voltage.

7. A submarine according to one of the preceding claims, **characterised in that** closed-loop control means (14) are provided, which in charging operation, set the output voltage of the DC/DC controller (2), such that the fuel cell installation (1) is operated in the rated load region.

8. A method for operating an electrical power supply of a submarine with a fuel cell installation (1) and batteries (3), with which one or more DC/DC controllers (2) is or are connected downstream of the fuel cell installation (1), wherein the output in each case (11) lies parallel to the battery (3) and in each case forms the,output of the power supply (5), and with which in normal operation, the output voltage of each DC/DC controller (2) is controlled with a closed-loop, such that the battery current becomes zero or at least tends to zero.

9. A method according to claim 8, **characterised in that** only after reaching the maximal permissible current for the fuel cell installation (1) is the output voltage at the DC/DC controller (2) lowered, in a manner such that with a current which then increases, a part current is delivered by the battery (3).

10. A method according to one of the preceding claims, **characterised in that** with a sudden increase in the load, the current of the fuel cell installation (1) is increased according to a predetermined temporal course which preferably corresponds to the load increase profile of the fuel cell installation (1).

11. A method according to one of the preceding claims, **characterised in that** given a failure of the battery (3), the DC/DC controller (2) is set/closed-loop controlled to a predefined voltage, preferably the rated voltage of the power supply (5).

12. A method according to one of the preceding claims, **characterised in that** in charging operation, the output voltage of the DC/DC controller (2) is lifted to such an extent that at least a part current flows into the battery (3).

## Revendications

1. Sous-marin comprenant une alimentation, autonome vis-à-vis de l'atmosphère extérieure, pour la propulsion et la fourniture d'énergie, qui comporte au moins une installation de piles à combustible (1) et au moins une batterie rechargeable (3), lesquelles alimentent, par exemple, un moteur électrique (4) pour le système de propulsion ainsi que le réseau de bord (5), **caractérisé en ce qu'**en aval de l'installation de piles à combustible (1) est connecté un convertisseur continu-continu (2), dont la sortie (11) est connectée en parallèle sur la batterie (3).

2. Sous-marin selon la revendication 1, **caractérisé en ce qu'**au convertisseur continu-continu (2) est associé un régulateur de courant (13), qui limite le courant de sortie du convertisseur continu-continu (2) à une valeur prédéterminée, de préférence la valeur maximale admissible.

3. Sous-marin selon l'une des revendications précédentes, **caractérisé en ce qu'**au convertisseur continu-continu (2) est associé un régulateur de courant (18), qui limite le courant de l'installation de piles à combustible (1) à une valeur prédéterminée, de préférence à la valeur maximale admissible.

4. Sous-marin selon l'une des revendications précédentes, **caractérisé en ce que** l'installation de piles à combustible (1) présente un ou plusieurs modules de piles à combustible montés en parallèle, un régulateur de courant étant associé à chaque module de piles à combustible, lequel régulateur de courant limite le courant d'un module de piles à combustible à une valeur prédéterminée, de préférence la valeur maximale admissible.

5. Sous-marin selon l'une des revendications précédentes, **caractérisé en ce qu'**au convertisseur continu-continu (2) est associé un régulateur de tension, qui règle la tension de sortie en service ordinaire à la tension nominale de la batterie.

6. Sous-marin selon l'une des revendications précédentes, **caractérisé en ce qu'**au convertisseur continu-continu (2) est associé un régulateur de tension (14), qui limite la tension de sortie à une tension prédéterminée, de préférence la tension maximale admissible.

7. Sous-marin selon l'une des revendications précédentes, **caractérisé en ce qu'**il est prévu des dispositifs de régulation (14) qui, au cours de l'activité de charge, règlent la tension de sortie du convertisseur continu-continu (2) de telle façon que l'installation de piles à combustible (1) soit exploitée dans la plage de charge nominale.

8. Procédé pour exploiter un réseau d'alimentation électrique d'un sous-marin comportant une installation de piles à combustible (1) et des batteries (3), selon lequel en aval de l'installation de piles à combustible (1) est ou sont connecté(s) un ou plusieurs convertisseur(s) continu-continu (2), la sortie étant placée respectivement (11) en parallèle sur la batterie et formant respectivement la sortie du réseau d'alimentation (5), et selon lequel, en service ordinaire, la tension de sortie de chaque convertisseur continu-continu (2) est régulée de telle façon que le courant de batterie devienne nul ou au moins tende vers zéro.

9. Procédé selon la revendication 8, **caractérisé en ce que** ce n'est qu'après que le courant maximum admissible pour l'installation de piles à combustible (1) est atteint, que la tension de sortie sur le convertisseur continu-continu (2) est abaissée d'une manière telle, que lorsque le courant croît ensuite, un courant partiel est délivré par la batterie (3).

10. Procédé selon l'une des revendications précédentes, **caractérisé en ce qu'**en cas de brusque accroissement de charge, le courant de l'installation de piles à combustible (1) est augmenté selon une allure prédéfinie de variation dans le temps, qui correspond de préférence au profil d'accroissement de charge de l'installation de piles à combustible (1).

11. Procédé selon l'une des revendications précédentes, **caractérisé en ce qu'**en cas de défaillance de la batterie (3), le convertisseur continu-continu (2) est réglé/régulé à une tension prédéterminée, de préférence la tension nominale du réseau d'alimentation (5).

12. Procédé selon l'une des revendications précédentes, **caractérisé en ce qu'**au cours de l'activité de charge, la tension de sortie du convertisseur continu-continu (2) est augmentée suffisamment pour qu'au moins un courant partiel circule dans la batterie (3).
